# EUROPÄISCHE PATENTSCHRIFT

(11) **EP 2 315 090 B1**
(45) Veröffentlichungstag und Bekanntmachung des Hinweises auf die Patenterteilung: **25.09.2019**
(21) Anmeldenummer: 10011919.7
(22) Anmeldetag: 11.08.2004
(51) Int. Cl.: G05B 19/05

(54) **Echtzeitsteuerverfahren für eine Steuerungseinrichtung eines industriellen technischen Prozesses und Echtzeitbetriebsverfahren für eine Recheneinrichtung**
Real-time control method for a control apparatus for a industrial technical process and real-time operating method for a computing apparatus
Méthode de commande en temps réel pour un dispositif de commande d'un processus industriel et méthode de commande en temps réel pour un ordinateur

(30) Priorität: 02.09.2003 DE 10340403
(43) Veröffentlichungstag der Anmeldung: 27.04.2011
(62) Teilanmeldung aus: 04019104.1
(73) Patentinhaber: Siemens Aktiengesellschaft, 80333 München (DE)
(72) Erfinder: Dolansky, Stefan, 90518 Altdorf (DE)

(56) Entgegenhaltungen:
- DE-A1- 3 534 465
- DE-A1- 19 906 695
- US-A- 5 530 643
- US-A- 5 796 936
- Avl List Gmbh: "Puma Compact 5, Systemhandbuch", , 1 September 1995 (1995-09-01), pages 3-104, XP055187295, Österreich Retrieved from the Internet: URL:https://www.avl.com/search?p_p_id=3&_3 _struts_action=%2Fsearch%2Fsearch&p_p_life cycle=0&p_p_state=normal&p_p_mode=view&p_p _col_id=column-1&p_p_col_count=1&_3_groupI d=10138&_3_category=All&_3_keywords=downlo ads&_3_search= [retrieved on 2015-05-04]

## Beschreibung

Die vorliegende Erfindung betrifft ein Echtzeitbetriebsverfahren für eine Recheneinrichtung, mit folgenden, mit einer Zykluszeit wiederholt ausgeführten Schritten, wobei die Zykluszeit im Millisekundenbereich oder darunter liegt:
- die Recheneinrichtung nimmt zumindest einen Teil eines Abbildes eines industriellen technischen Prozesses entgegen,
- die Recheneinrichtung ermittelt unter Abarbeitung eines Steuerungsprogramms anhand des ihr übermittelten Teiles des Abbildes des Prozesses zumindest einen Teil eines Steuerzustandes für den Prozess.

Weiterhin betrifft die vorliegende Erfindung ein auf einem Datenträger gespeichertes Computerprogramm zur Durchführung eines Echtzeitbetriebsverfahrens sowie eine mit einem derartigen Computerprogramm programmierte Recheneinrichtung.

Steuerungseinrichtungen für industrielle technische Prozesse sind allgemein bekannt. Sie sind, je nach Anwendungsgebiet, z. B. als numerische Steuerungen (CNC) oder als speicherprogrammierbare Steuerungen (SPS) ausgebildet. Bei diesen Steuerungseinrichtungen werden mit einer Zykluszeit, die im Millisekundenbereich oder darunter liegt, folgende Schritte ausgeführt:
- Eine Anzahl von Erfassungseinheiten erfasst Zustandssignale des Prozesses, wobei die erfassten Zustandssignale in ihrer Gesamtheit ein Abbild des Prozesses darstellen.
- Jede der Erfassungseinheiten übermittelt die von ihr erfassten Zustandssignale an eine einzige logische Logikeinheit.
- Die logische Logikeinheit ermittelt unter Abarbeitung eines Steuerungsprogramms anhand des Abbildes des Prozesses einen Steuerzustand für den Prozess, der für eine Anzahl von Steuereinheiten Steuersignale enthält.
- Die logische Logikeinheit übermittelt an jede der Steuereinheiten die für die jeweilige Steuereinheit bestimmten Steuersignale.
- Jede der Steuereinheiten wirkt entsprechend den an sie übermittelten Steuersignalen auf den Prozess ein.

Aus der US 5 530 634 A ist ein verteiltes Steuerungssystem bekannt, bei dem ein technischer Prozess von einer Anzahl von Kontrollmodulen gemeinsam gesteuert wird. Die Kontrollmodule kommunizieren im Betrieb miteinander. Sie sind von einem Programmiergerät aus programmierbar.

Eine derartige Steuerungseinrichtung ist auch in der DE 199 06 695 A1 beschrieben.

Aus der DE 35 34 465 A1 ist ein Verbundsystem speicherprogrammierbarer Steuerungen bekannt, das mehrere miteinander verbundene Steuereinheiten aufweist. Jede Steuereinheit des Verbundsystems ist in der Lage, Teilbereiche des Gesamtprozesses eigenständig zu steuern. Eine der Steuereinheiten wird als Zentraleinheit benutzt. Die anderen Steuereinheiten arbeiten als dezentrale Einheiten der Zentraleinheit.

Aus dem Systemhandbuch "PUMA compact 5", herausgegeben von der AVL List GmbH, Graz, Österreich, ist ein Prüfstand bekannt, dessen Steuer- und Kontrollmodule über eine Verbindungsbox (Connectionbox) und eine in einem PC angeordnete Schnittstellenkarte an einen PC angeschlossen und von dem PC aus ansteuerbares sind.

Beim Stand der Technik ist die Hardware, welche das Steuerungsprogramm ausführt, prozessnah angeordnet. Daher muss die logische Logikeinheit stets die volle Funktionalität der Echtzeitanwendung vor Ort realisieren können. Wenn in einem derartigen Fall eine höhere Funktionalität gefordert wird, ist es oftmals notwendig, die logische Logikeinheit auszutauschen. Ferner ist es umständlich und kompliziert, eine neue Version einer Steuerungssoftware, insbesondere den Echtzeitkern, an alle implementierten Steuerungseinrichtungen zu verteilen.

Die Aufgabe der vorliegenden Erfindung besteht darin, diese Nachteile des Standes der Technik zu vermeiden.

Die Aufgabe wird gelöst durch ein Echtzeitbetriebsverfahren für eine Recheneinrichtung mit folgenden, mit einer Zykluszeit wiederholt ausgeführten Schritten, wobei die Zykluszeit im Millisekundenbereich oder darunter liegt:
a) die Recheneinrichtung nimmt von einer einzigen logischen Logikeinheit über ein Übertragungsmedium zumindest einen Teil eines Abbildes eines industriellen technischen Prozesses entgegen,
b) die Recheneinrichtung ermittelt unter Abarbeitung eines Steuerungsprogramms anhand des ihr übermittelten Teiles des Abbildes des Prozesses, zumindest einen Teil eines Steuerzustandes für den Prozess,
c) die Recheneinrichtung übermittelt den von ihr ermittelten Teil des Steuerzustandes über das Übertragungsmedium an die logische Logikeinheit,
   - wobei die Recheneinrichtung vor dem Beginn der zyklischen Ausführung der Schritte a) bis c) die Zykluszeit von der logischen Logikeinheit über das Übertragungsmedium entgegen nimmt oder die Zykluszeit über das Übertragungsmedium an die logische Logikeinheit übermittelt.

Es erfolgt also eine räumliche Trennung von industriellem technischem Prozess, Erfassungs- und Steuereinheiten und logischer Logikeinheit auf der einen Seite und Recheneinrichtung auf der anderen Seite. Somit ist es insbesondere möglich, die Recheneinrichtung und/oder den Echtzeitkern zu aktualisieren bzw. zu verbessern, ohne die logische Logikeinheit vor Ort austauschen zu müssen. Denn die zu erfassenden Zustandssignale und die an den Prozess auszugebenden Steuersignale sind von ihrem Umfang her unverändert geblieben. Die Rechenleistung zur Ermittlung der Steuersignale hingegen wird nicht mehr vor Ort benötigt. Auch ist ein Verteilen insbesondere eines Echtzeitkerns zum Betreiben der Recheneinrichtung nicht mehr erforderlich.

Das Übertragungsmedium kann sowohl in logischer Hinsicht als auch bezüglich seiner physikalischen Ausgestaltung beliebig geartet sein.

In logischer Hinsicht ist es beispielsweise möglich, dass das Übertragungsmedium ein Rechnernetz, z. B. das Internet oder ein LAN, ist. Ein LAN kann dabei insbesondere als IRTE realisiert sein. Auch kann das Übertragungsmedium eine Punkt-zu-Punkt-Verbindung sein, z. B. das Telefonnetz. Auch Mischformen sind möglich, man denke beispielsweise an das Anwählen eines an das Internet angeschlossenen Rechners über das Telefonnetz.

Bezüglich seiner physikalischen Ausgestaltung kann das Übertragungsmedium - alternativ oder ergänzend zueinander - einen drahtlosen und einen leitungsgebundenen Übertragungsmediumabschnitt umfassen.

Der industrielle technische Prozess ist prinzipiell beliebiger Natur. Insbesondere ist es möglich, dass er ein Produktionsprozess ist, beispielsweise ein Bearbeitungsprozess einer Werkzeugmaschine.

Wenn die Recheneinrichtung vor dem Beginn der zyklischen Ausführung der oben erwähnten Schritten einen Echtzeitteil eines von der Logikeinheit auszuführenden Computerprogramms an die logische Logikeinheit übermittelt, ist eine besonders flexible Programmierung der logischen Logikeinheit möglich.

Wenn die logische Logikeinheit vor dem Beginn der zyklischen Ausführung der oben erwähnten Schritte Parameterdaten des Prozesses an die Recheneinrichtung übermittelt, ist eine bessere Ermittlung des Steuerzustandes durch die Recheneinrichtung möglich.

Wenn die logische Logikeinheit vor dem Beginn der zyklischen Ausführung der oben erwähnten Schritte über das Übertragungsmedium an die Recheneinrichtung ein von der Recheneinrichtung auszuführendes Steuerungsprogramm übermittelt, ist die Zusammenarbeit zwischen der logischen Logikeinheit und der Recheneinrichtung besonders flexibel. Alternativ kann das Steuerungsprogramm aber auch schon vorab in der Recheneinrichtung hinterlegt sein. Auch ist es möglich, dass die logische Logikeinheit ein in der Recheneinrichtung hinterlegtes Steuerungsprogramm anwählt.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- FIG 1: eine Steuerungsanordnung,
- FIG 2: Zeitdiagramme,
- FIG 3: eine weitere Steuerungsanordnung und
- FIG 4 und 5: Ablaufdiagramme.

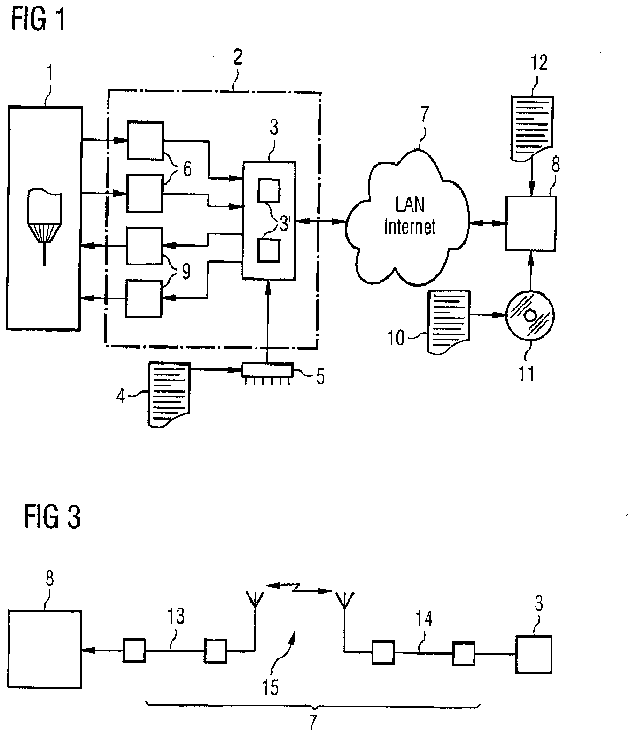

Gemäß FIG 1 wird ein industrieller technischer Prozess 1 von einer Steuerungseinrichtung 2 gesteuert. Der industrielle technische Prozess 1 ist, wie in FIG 1 durch die schematische Darstellung eines Bohrfutters und eines Bohrers angedeutet ist, im vorliegenden Fall ein Produktionsprozess 1, nämlich ein Bearbeitungsprozess 1 einer Werkzeugmaschine. Hiermit korrespondierend ist eine logische Logikeinheit 3 der Steuerungseinrichtung 2 als numerische Steuerung 3 (CNC 3) ausgebildet. Alternativ könnte die logische Logikeinheit 3 aber auch als echtzeitfähiger Industrie-PC, z.B. als Industrie-PC mit einem NRK (NRK = numeric realtime kernel) ausgebildet sein. Sie kann alternativ eine einzige oder - wie in FIG 1 dargestellt - mehrere physikalische Logikeinheiten 3' aufweisen.

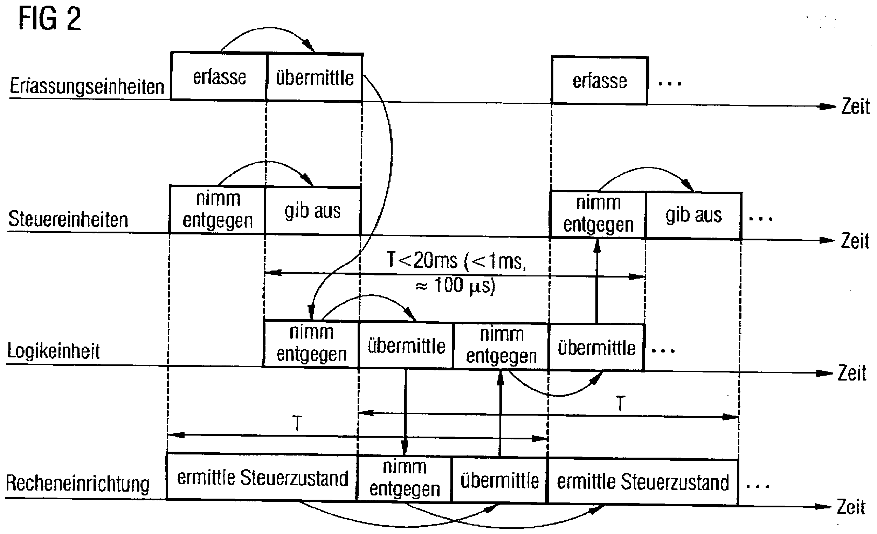

Die Logikeinheit 3 ist mit einem Computerprogramm 4 programmiert, das auf einem Datenträger 5, z.B. einem gepufferten SRAM, in (ausschließlich) maschinenlesbarer Form gespeichert ist. Auf Grund der Programmierung mit dem Computerprogramm 4 führt die Steuerungseinrichtung 2 ein nachfolgend in Verbindung mit den FIG 1 und 2 näher beschriebenes Echtzeitsteuerverfahren aus.

Gemäß den FIG 1 und 2 werden mittels Erfassungseinheiten 6 Zustandssignale des Prozesses 1 erfasst. Gemäß den FIG 1 und 2 werden dabei über die Erfassungseinheiten 6 alle Zustandssignale des Prozesses 1 erfasst. Die Zustandssignale stellen somit in ihrer Gesamtheit ein Abbild des Prozesses 1 dar.

Nach dem Erfassen der Zustandssignale werden diese von den Erfassungseinheiten 6 an die Logikeinheit 3 übermittelt. Die Logikeinheit 3 ist allen dabei Erfassungseinheiten 6 gemeinsam. Sie übermittelt das Abbild des Prozesses 1 (oder zumindest einen Teil davon) über ein Übertragungsmedium 7 an eine Recheneinrichtung 8.

Zwischen den Erfassungseinheiten 6 und der Logikeinheit 3 können intelligente Einheiten angeordnet sein. Auch können die Erfassungseinheiten 6 selbst eine Intelligenz aufweisen. Die Kommunikation mit der Recheneinheit 8 erfolgt aber ausschließlich durch die Logikeinheit 3.

Nach dem Übermitteln des Abbildes des Prozesses 1 an die Recheneinrichtung 8 nimmt die Logikeinheit 3 von der Recheneinrichtung 8 über das Übertragungsmedium 7 einen Steuerzustand für den Prozess 1 (oder zumindest einen Teil davon) entgegen. Der Steuerzustand enthält dabei Steuersignale für eine Anzahl von Steuereinheiten 9. Sie übermittelt die Steuersignale an die Steuereinheiten 9. Diese wirken dann entsprechend den ihnen übermittelten Steuersignalen auf den Prozess 1 ein.

Wie aus FIG 2 ersichtlich ist, werden die obenstehend beschriebenen Schritte innerhalb einer Zykluszeit T ausgeführt. Die Zykluszeit T liegt dabei im Millisekundenbereich. Typisch ist sie kleiner als 20 ms. Meist ist sie sogar kleiner als 1 ms und liegt z.B. bei etwa 100 *µ*s.

Gemäß der vorliegenden Erfindung ist die Recheneinrichtung 8 also im Gegensatz zum Stand der Technik der Logikeinheit 3 nicht mehr fest zugeordnet (bzw. mit ihr identisch), sondern entsprechend FIG 1 mit der Logikeinheit 3 über das Übertragungsmedium 7 verbunden. Die Recheneinrichtung 8 kann daher an einem beliebigen Ort angeordnet sein, wenn nur durch das Übertragungsmedium 7 der erforderliche Datenaustausch möglich ist.

Das Übertragungsmedium 7 kann beliebig ausgebildet sein. Beispielsweise kann das Übertragungsmedium 7 als Rechnernetz, z.B. in Form eines LAN (LAN = local area network), ausgebildet sein. Ein Beispiel eines derartigen LAN ist ein sogenanntes IRTE (IRTE = industrial real time ethernet). Auch kann das Übertragungsmedium 7, sofern eine hinreichend schnelle und zuverlässige Kommunikation gewährleistet ist, das Internet sein.

Alternativ ist es auch möglich, dass das Übertragungsmedium 7 eine Punkt-zu-Punkt-Verbindung ist. Ein Beispiel einer derartigen Punkt-zu-Punkt-Verbindung ist das Telefonnetz.

Auch Mischformen sind denkbar, z.B. eine Ankopplung an ein Rechnernetz über das Telefonnetz.

Die Recheneinrichtung 8 selbst ist - siehe FIG 1 - ebenfalls mit einem Computerprogramm 10 programmiert. Auch dieses Computerprogramm 10 ist auf einem Datenträger 11, z.B. einer CD-ROM 11, hinterlegt und kann der Recheneinrichtung 8 auf diese Weise zugeführt werden. Auf Grund der Programmierung mit dem Computerprogramm 10 führt die Recheneinrichtung 8 ein Echtzeitbetriebsverfahren aus, das nachfolgend ebenfalls mit Bezug auf die FIG 1 und 2 näher beschrieben wird.

Gemäß den FIG 1 und 2 nimmt die Recheneinrichtung 8 von der Logikeinheit 3 über das Übertragungsmedium 7 das Abbild des Prozesses 1 (bzw. einen Teil davon) entgegen. Sie ermittelt daraufhin unter Abarbeitung eines Steuerungsprogramms 12 anhand des Abbildes des Prozesses 1 den Steuerzustand für den Prozess 1 (bzw. einen Teil davon). Das Steuerungsprogramm 12 korrespondiert dabei selbstverständlich mit dem industriellen technischen Prozess 1. Wenn der Prozess 1 ein Produktionsprozess 1 ist, z.B. ein Bearbeitungsprozess 1 einer Werkzeugmaschine, ist auch das Steuerungsprogramm 12 ein Steuerungsprogramm 12 für einen derartigen Prozess 1. Der Begriff "Steuerungsprogramm" umfasst dabei nur das Anwendungsprogramm, bei einem Werkzeugmaschinenprogramm also z.B. ein Teileprogramm gemäß DIN 66025, nicht aber ein Betriebssystem. Das (Echtzeit-)Betriebssystem ist vielmehr Bestandteil des Computerprogramms 10.

Der von der Recheneinrichtung 8 ermittelte Steuerzustand wird von der Recheneinrichtung 8 über das Übertragungsmedium 7 schließlich an die Logikeinheit 3 übermittelt.

Auch die Recheneinrichtung 8 führt die von ihr ausgeführten Schritte innerhalb der Zykluszeit T aus. Die Zykluszeit T ist dabei die gleiche Zykluszeit T, mit der auch die Logikeinheit 3 ihre Schritte ausführt.

Bei der obigen Darstellung gemäß FIG 1 wurde mehr die logische Ausgestaltung des Übertragungsmediums 7 hervorgehoben. Die physikalische Ausgestaltung des Übertragungsmediums 7 wird nachstehend in Verbindung mit FIG 3 näher erläutert. Die Darstellung gemäß FIG 3 ist dabei rein beispielhaft.

Gemäß FIG 3 weist das Übertragungsmedium 7 zwei Endabschnitte 13, 14 und einen Mittelabschnitt 15 auf. In den Endabschnitten 13, 14 erfolgt eine leitungsgebundene Datenübertragung, z.B. über Kupferdrähte oder Lichtwellenleiter. Im Mittelabschnitt 15 erfolgt eine drahtlose Datenübertragung, z.B. über eine Funkstrecke. Es ist aber auch eine andere Art der drahtlosen Datenübertragung, z. B. durch Infrarotsignale oder Ultraschallsignale, denkbar.

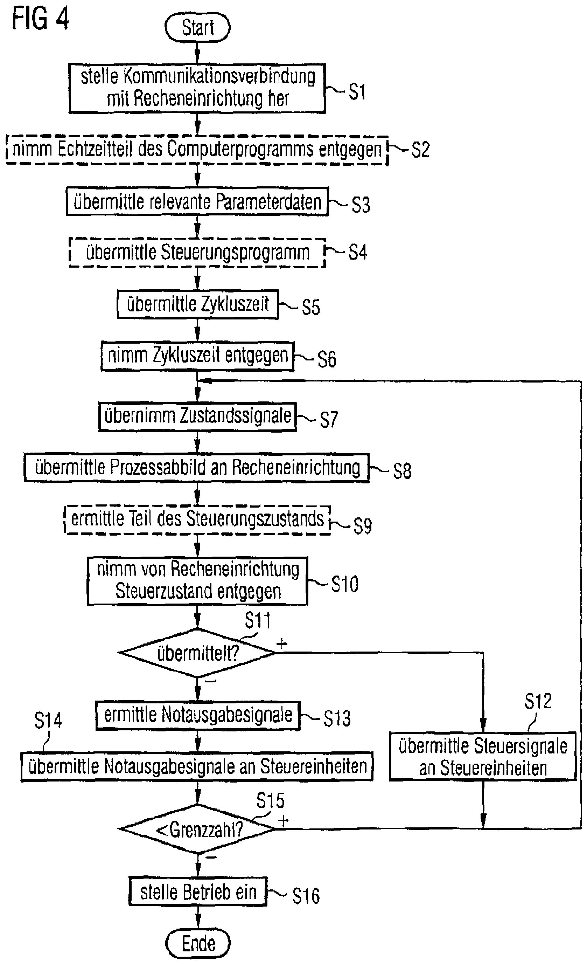

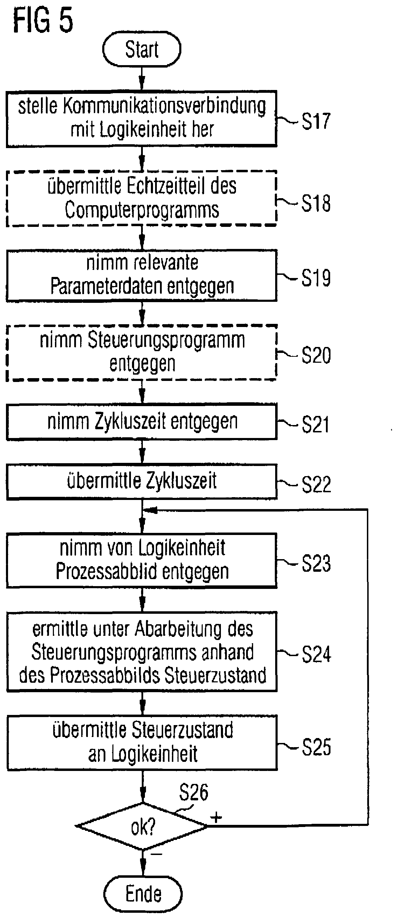

Die Logikeinheit 3 und die Recheneinrichtung 8 führen nicht nur die obenstehend in Verbindung mit den FIG 1 und 2 beschriebenen Aufgaben aus. Weitere von der Logikeinheit 3 und der Recheneinrichtung 8 ausgeführte Aufgaben werden nachfolgend in Verbindung mit den FIG 4 und 5 näher erläutert. Die FIG 4 bezieht sich dabei auf die Logikeinheit 3, die FIG 5 auf die Recheneinrichtung 8.

Gemäß FIG 4 stellt die Logikeinheit 3 zunächst in einem Schritt S1 eine Kommunikationsverbindung mit der Recheneinrichtung 8 her.

Es ist möglich, dass in der Steuerungseinrichtung 2 zunächst nur ein Basisprogramm vorhanden ist, das nur eine nicht echtzeitfähige Kommunikation mit der Recheneinrichtung 8 ermöglicht. In diesem Fall nimmt die Logikeinheit 3 in einem Schritt S2 über das Übertragungsmedium 7 einen Echtzeitteil des Computerprogramms 4 von der Recheneinrichtung 8 entgegen und speichert es im Datenträger 5 ab. Dieser Schritt S2 ist dabei nur optional und daher in FIG 4 nur gestrichelt dargestellt.

Ferner übermittelt die Logikeinheit 3 in einem Schritt S3 über das Übertragungsmedium 7 relevante Parameterdaten wie beispielsweise den konkreten Auf- und Ausbau der Maschine, mittels derer der Prozess 1 realisiert wird, an die Recheneinrichtung 8.

Als nächstes übermittelt die Logikeinheit 3 in einem Schritt S4 über das Übertragungsmedium 7 das Steuerungsprogramm 12 an die Recheneinrichtung 8. Auch der Schritt S4 ist nur optional und daher in FIG 4 nur gestrichelt dargestellt.

In einem Schritt S5 übermittelt die Logikeinheit 3 schließlich die Zykluszeit T über das Übertragungsmedium 7 an die Recheneinrichtung 8. Alternativ könnte in einem Schritt S6 die Logikeinheit 3 die Zykluszeit T auch über das Übertragungsmedium 7 von der Recheneinheit 8 entgegennehmen. Die Zykluszeit T könnte alternativ auch fest voreingestellt sein. Von den Schritten S5 und S6 wird also maximal einer ausgeführt .

Erst nach Ausführen dieser Schritte S1 bis S6 führt die Logikeinheit 3 Schritte S7 bis S15 aus. Im Schritt S7 übernimmt die Logikeinheit 3 die von den Erfassungseinheiten 6 erfassten Zustandssignale. Im Schritt S8 übermittelt sie das Abbild des Prozesses 1 über das Übertragungsmedium 7 an die Recheneinrichtung 8.

Für den Fall, dass die Recheneinrichtung 8 nur einen Teil des Steuerzustands ermittelt, führt die Logikeinheit 3 in einem Schritt S9 eine Ermittlung des restlichen Steuerzustandes durch. Der Schritt S9 ist also nicht unbedingt vorhanden und daher ebenfalls nur gestrichelt dargestellt.

Im Schritt S10 nimmt die Logikeinheit 3 den von der Recheneinrichtung 8 über das Übertragungsmedium 7 übermittelten Steuerzustand entgegen.

Im Schritt S11 prüft die Logikeinheit 3, ob ihr von der Recheneinrichtung 8 der Steuerzustand übermittelt wird. Wenn dies der Fall ist, gibt die Logikeinheit 3 im Schritt S12 die Steuersignale an die Steuereinheiten 9 weiter und springt zum Schritt S7 zurück. Anderenfalls ermittelt die Logikeinheit 3 im Schritt S13 selbst Notausgabesignale und übermittelt diese in einem Schritt S14 an die Steuereinheiten 9. Somit ist auch bei einem Ausbleiben der Steuersignale gewährleistet, dass die Logikeinheit 3 den Prozess 1 in definierter Weise steuert, z.B. einen Notbetrieb des Prozesses 1 aufrecht erhält.

Nach dem Schritt S14 wird im Schritt S15 überprüft, ob eine Grenzzahl von Übermittlungsversuchen überschritten ist. Wenn dies noch nicht der Fall ist, wird zum Schritt S7 zurück gesprungen. Anderenfalls wird in einem Schritt S16 der Betrieb des Prozesses 1 eingestellt.

Der in FIG 5 dargestellte, von der Recheneinrichtung 8 ausgeführte Ablauf korrespondiert im Wesentlichen mit dem in FIG 4 dargestellten, von der Logikeinheit 3 durchgeführten Ablauf.

Gemäß FIG 5 stellt die Recheneinrichtung 8 ebenfalls zunächst in einem Schritt S17 die Kommunikationsverbindung zur Logikeinheit 3 her.

Sodann übermittelt sie in einem Schritt S18 den Echtzeitteil des Computerprogramms 4. Der Schritt S18 ist - ebenso wie der Schritt S2 von FIG 4 - nur optional und daher in FIG 5 nur gestrichelt dargestellt.

Als nächstes nimmt die Recheneinrichtung 8 in einem Schritt S19 die relevanten Parameterdaten, z.B. über den konkreten Aufbau und den Ausbau der gesteuerten Maschine, entgegen. Ferner nimmt sie in einem Schritt S20 das Steuerungsprogramm 12 entgegen. Der Schritt S20 ist - ebenso wie der Schritt S4 von FIG 4 - nur optional und daher in FIG 5 nur gestrichelt dargestellt.

Schließlich nimmt die Recheneinrichtung 8 noch in einem Schritt S21 die Zykluszeit T entgegen. Alternativ könnte die Recheneinrichtung 8 auch in einem Schritt S22 die Zykluszeit T an die Logikeinheit 3 übermitteln. Auch könnte die Zykluszeit T fest vorgegeben sein. Auch von den Schritten S21 und S22 wird daher maximal einer ausgeführt.

Sodann führt die Recheneinrichtung 8 Schritte S23 bis S26 aus. Im Schritt S23 nimmt die Recheneinrichtung 8 von der Logikeinheit 3 das Abbild des Prozesses 1 entgegen. Im Schritt S24 ermittelt die Recheneinrichtung 8 unter Abarbeitung des Steuerungsprogramms 12 anhand des Abbildes des Prozesses 1 den Steuerzustand für den Prozess 1. Im Schritt S25 übermittelt die Recheneinrichtung 8 den Steuerzustand über das Übertragungsmedium 7 an die Logikeinheit 8.

Im Schritt S26 überprüft die Recheneinrichtung 8, ob die Übermittlung des Steuerzustands ordnungsgemäß war. Beispielsweise kann eine Quittierung von der Logikeinheit 3 abgefragt werden. Bei ordnungsgemäßer Übermittlung wird zum Schritt S23 zurück gesprungen, anderenfalls wird - gegebenenfalls erst nach mehreren erfolglosen Übermittlungsversuchen - die weitere Abarbeitung der Schritte S23 bis S26 beendet.

Obenstehend wurde die vorliegende Erfindung in Verbindung mit einer Steuerungseinrichtung 2 für eine Werkzeugmaschine beschrieben. Die vorliegende Erfindung ist aber nicht auf Werkzeugmaschinen beschränkt. Sie könnte ebenso bei anderen industriellen technischen Prozessen 1 eingesetzt werden, In diesem Fall ist die Steuerungseinrichtung 2 gegebenenfalls andersartig ausgebildet. Beispielsweise kann die Steuerungseinrichtung 2 in diesem Fall als speicherprogrammierbare Steuerung (SPS) ausgebildet sein.

## Patentansprüche

1. Echtzeitbetriebsverfahren für eine Recheneinrichtung (8), mit folgenden, mit einer Zykluszeit wiederholt ausgeführten Schritten, wobei die Zykluszeit im Millisekundenbereich oder darunter liegt:
a) die Recheneinrichtung (8) nimmt von einer einzigen logischen Logikeinheit (3) über ein Übertragungsmedium (7) zumindest einen Teil eines Abbildes eines industriellen technischen Prozesses (1) entgegen,
b) die Recheneinrichtung (8) ermittelt unter Abarbeitung eines Steuerungsprogramms (12) anhand des ihr übermittelten Teiles des Abbildes des Prozesses (1), zumindest einen Teil eines Steuerzustandes für den Prozess (1),
c) die Recheneinrichtung (8) übermittelt den von ihr ermittelten Teil des Steuerzustandes über das Übertragungsmedium (7) an die logische Logikeinheit (3),
- wobei die Recheneinrichtung (8) vor dem Beginn der zyklischen Ausführung der Schritte a) bis c) die Zykluszeit von der logischen Logikeinheit (3) über das Übertragungsmedium (7) entgegen nimmt oder die Zykluszeit (T) über das Übertragungsmedium (7) an die logische Logikeinheit (3) übermittelt.

2. Echtzeitbetriebsverfahren nach Anspruch 1, **dadurch gekennzeichnet, dass** das Übertragungsmedium (7) ein Rechnernetz (7), z. B. das Internet oder ein LAN, ist.

3. Echtzeitbetriebsverfahren nach Anspruch 1, **dadurch gekennzeichnet, dass** das Übertragungsmedium (7) eine Punkt-zu-Punkt-Verbindung (7) ist.

4. Echtzeitbetriebsverfahren nach Anspruch 1, 2 oder 3, **dadurch gekennzeichnet, dass** das Übertragungsmedium (7) mindestens einen drahtlosen Übertragungsmediumabschnitt (15) umfasst.

5. Echtzeitbetriebsverfahren nach einem der Ansprüche 1 bis **dadurch gekennzeichnet, dass** das Übertragungsmedium (7) mindestens einen leitungsgebundenen Übertragungsmediumabschnitt (13, 14) umfasst.

6. Echtzeitbetriebsverfahren nach einem der Ansprüche 1 bis **dadurch gekennzeichnet, dass** das Steuerungsprogramm (12) ein Steuerungsprogramm (12) für einen Produktionsprozess (1), insbesondere für einen Bearbeitungsprozess (1) einer Werkzeugmaschine, ist.

7. Echtzeitbetriebsverfahren nach einem der Ansprüche 1 bis 6, **dadurch gekennzeichnet, dass** die Recheneinrichtung (8) vor dem Beginn der zyklischen Ausführung der in Anspruch 1 erwähnten Schritte einen Echtzeitteil eines von der Logikeinheit (3) auszuführenden Computerprogramms (4) an die Logikeinheit (3) übermittelt.

8. Echtzeitbetriebsverfahren nach einem der Ansprüche 1 bis 7, **dadurch gekennzeichnet, dass** die Recheneinrichtung (8) vor dem Beginn der zyklischen Ausführung der in Anspruch 1 erwähnten Schritte Parameterdaten des Prozesses (1) von der Logikeinheit (3) entgegen nimmt.

9. Echtzeitbetriebsverfahren nach einem der Ansprüche 1 bis 8, **dadurch gekennzeichnet, dass** die Recheneinrichtung (8) das Steuerungsprogramm (12) vor dem Beginn der zyklischen Ausführung der in Anspruch 1 erwähnten Schritte von der logischen Logikeinheit (3) über das Übertragungsmedium (7) entgegen nimmt.

10. Auf einem Datenträger (11) gespeichertes Computerprogramm zur Durchführung eines Echtzeitbetriebsverfahrens nach einem der Ansprüche 1 bis 9.

11. Recheneinrichtung, die im Betrieb der Recheneinrichtung mit einer logischen Logikeinheit (3) einer Steuerungseinrichtung (2) derart zusammenwirkt, dass sie mit einer Zykluszeit, die im Millisekundenbereich oder darunter liegt, wiederholt
a) von der logischen Logikeinheit (3) über ein Übertragungsmedium (7) zumindest einen Teil eines Abbildes eines industriellen technischen Prozesses (1) entgegen nimmt,
b) unter Abarbeitung eines Steuerungsprogramms (12) anhand des ihr von der logischen Logikeinheit (3) übermittelten Teiles des Abbildes des Prozesses (1) zumindest einen Teil eines Steuerzustandes für den Prozess (1) ermittelt und
c) den von ihr ermittelten Teil des Steuerzustandes über das Übertragungsmedium (7) an die logische Logikeinheit (3) übermittelt,
- wobei die Recheneinrichtung (8) vor dem Beginn der zyklischen Ausführung der Schritte a) bis c) die Zykluszeit von der logischen Logikeinheit (3) über das Übertragungsmedium (7) entgegen nimmt oder die Zykluszeit (T) über das Übertragungsmedium (7) an die logische Logikeinheit (3) übermittelt.

## Claims

1. Real-time control method for a computing unit (8), having the following steps repeatedly executed at a cycle time, wherein the cycle time lies in the range of milliseconds or less:
a) the computing unit (8) receives at least a part of a map of an industrial technical process (1) from a single logical logic unit (3) via a transmission medium (7),
b) the computing unit (8) executes a control program (12) on the basis of the part of the map of the process (1) transmitted to it and determines at least a part of a control status for the process (1),
c) the computing unit (8) transmits the part of the control status determined by it to the logical logic unit (3) via the transmission medium (7),
- wherein before the start of the cyclical execution of the steps a) to c) the computing unit (8) receives the cycle time from the logical logic unit (3) via the transmission medium (7) or transmits the cycle time (T) to the logical logic unit (3) via the transmission medium (7).

2. Real-time control method according to claim 1,
**characterised in that**
the transmission medium (7) is a computer network (7), e.g.
the Internet or a LAN.

3. Real-time control method according to claim 1,
**characterised in that**
the transmission medium (7) is a point-to-point connection (7) .

4. Real-time control method according to claim 1, 2 or 3,
**characterised in that**
the transmission medium (7) comprises at least one wireless transmission medium section (15).

5. Real-time control method according to one of claims 1 to 4,
**characterised in that**
the transmission medium (7) comprises at least one wired transmission medium section (13, 14).

6. Real-time control method according to one of claims 1 to 5,
**characterised in that**
the control program (12) is a control program (12) for a production process (1), in particular for a machining process (1) of a machine tool.

7. Real-time control method according to one of claims 1 to 6,
**characterised in that**
before the start of the cyclical execution of the steps referred to in claim 1 the computing unit (8) transmits a real-time part of a computer program (4) to be executed by the logic unit (3) to the logic unit (3).

8. Real-time control method according to one of claims 1 to 7,
**characterised in that**
before the start of the cyclical execution of the steps referred to in claim 1 the computing unit (8) receives parameter data for the process (1) from the logic unit (3).

9. Real-time control method according to one of claims 1 to 8,
**characterised in that**
before the start of the cyclical execution of the steps referred to in claim 1 the computing unit (8) receives the control program (12) from the logical logic unit (3) via the transmission medium (7).

10. Computer program stored on a data carrier (11) for execution of a real-time control method according to one of claims 1 to 9.

11. Computing unit which in operation of the computing unit cooperates with a logical logic unit (3) of a control device (2), such that with a cycle time lying in the range of milliseconds or less it repeatedly:
a) receives at least a part of a map of an industrial technical process (1) from the logical logic unit (3) via a transmission medium (7),
b) executes a control program (12) on the basis of the part of the map of the process (1) transmitted to it by the logical logic unit (3) and determines at least a part of a control status for the process (1) and
c) transmits the part of the control status determined by it to the logical logic unit (3) via the transmission medium (7),
- wherein before the start of the cyclical execution of the steps a) to c) the computing unit (8) receives the cycle time from the logical logic unit (3) via the transmission medium (7) or transmits the cycle time (T) to the logical logic unit (3) via the transmission medium (7).

## Revendications

1. Procédé de fonctionnement en temps réel d'un dispositif (8) d'ordinateur, comprenant les stades suivants effectués de manière répétée suivant un temps de cycle, le temps de cycle étant dans le domaine de la milliseconde ou inférieur :
a) le dispositif (8) d'ordinateur reçoit d'une unité (3) logique unique, par un support (7) de transmission, au moins une partie d'une reproduction d'un processus (1) technique industriel,
b) le dispositif (8) d'ordinateur détermine, en élaborant un programme (12) de commande à l'aide de la partie qui lui a été transmise de la reproduction du processus (1), au moins une partie d'un état de commande du processus (1),
c) le dispositif (8) d'ordinateur transmet la partie qu'il a déterminée de l'état de commande à l'unité (3) logique par le support (7) de transmission,
- dans lequel le dispositif (8) d'ordinateur reçoit, avant le début de la réalisation cyclique des stades a) à c), le temps de cycle de l'unité (3) logique par le support (7) de transmission ou transmet à l'unité (3) logique le temps (T) de cycle par le support (7) de transmission.

2. Procédé de fonctionnement en temps réel suivant la revendication 1, **caractérisé en ce que** le support (7) de transmission est un réseau (7) d'ordinateur, par exemple l'Internet ou un LAN.

3. Procédé de fonctionnement en temps réel suivant la revendication 1, **caractérisé en ce que** le support (7) de transmission est une liaison (7) point à point.

4. Procédé de fonctionnement en temps réel suivant la revendication 1, 2 ou 3, **caractérisé en ce que** le support (7) de transmission comprend au moins une partie (15) de support de transmission sans fil.

5. Procédé de fonctionnement en temps réel suivant l'une des revendications 1 à 4, **caractérisé en ce que** le support (7) de transmission comprend au moins une partie (13, 14) de support de transmission par fil.

6. Procédé de fonctionnement en temps réel suivant l'une des revendications 1 à 5, **caractérisé en ce que** le programme (12) de commande est un programme (12) de commande d'un processus (1) de production, notamment d'un processus (1) d'usinage d'une machine-outil.

7. Procédé de fonctionnement en temps réel suivant l'une des revendications 1 à 6, **caractérisé en ce que** le dispositif (8) d'ordinateur transmet à l'unité (3) logique, avant le début de la réalisation cyclique des stades mentionnés à la revendication 1, une partie en temps réel d'un programme (4) d'ordinateur à réaliser par l'unité (3) logique.

8. Procédé de fonctionnement en temps réel suivant l'une des revendications 1 à 7, **caractérisé en ce que** le dispositif (8) d'ordinateur reçoit de l'unité (3) logique, avant le début de la réalisation cyclique des stades mentionnés à la revendication 1, des données de paramètre du processus (1).

9. Procédé de fonctionnement en temps réel suivant l'une des revendications 1 à 8, **caractérisé en ce que** le dispositif (8) d'ordinateur reçoit de l'unité (3) logique par le support (7) de transmission, le programme (12) d'ordinateur, avant le début de la réalisation cyclique des stades mentionnés à la revendication 1.

10. Programme d'ordinateur mémorisé sur un support (1) de données pour effectuer un procédé de fonctionnement en temps réel suivant l'une des revendications 1 à 9.

11. Dispositif d'ordinateur qui, en fonctionnement du dispositif d'ordinateur, coopère avec une unité (3) logique d'un dispositif (1) de commande, de manière à recevoir, avec un temps de cycle qui est dans le domaine de la milliseconde ou inférieur, de manière répétée
a) de l'unité (3) logique, par un support (7) de transmission, au moins une partie d'une reproduction d'un processus (1) technique industriel,
b) en élaborant un programme (12) de commande, à l'aide de la partie de la reproduction du processus (1) qu'il a transmise par l'unité (3) logique, détermine au moins une partie d'un état de commande du processus (1) et
c) transmet la partie qu'il a déterminée de l'état de commande à l'unité (3) logique par le support (7) de transmission,
- dans lequel le dispositif (8) d'ordinateur reçoit de l'unité (8) logique, par le support (7) de transmission, le temps de cycle, avant le début de la réalisation cyclique des stades a) à c) ou transmet le temps (T) de cycle à l'unité (3) logique par le support (7) de transmission.
